# EUROPÄISCHE PATENTSCHRIFT

(11) **EP 3 157 799 B1**
(45) Veröffentlichungstag und Bekanntmachung des Hinweises auf die Patenterteilung: **14.03.2018**
(21) Anmeldenummer: 15728873.9
(22) Anmeldetag: 15.06.2015
(51) Int. Cl.: B62D 1/10, B62D 1/16

(54) **EINRICHTUNG ZUM BEFESTIGEN EINES MANTELROHRSCHALTERMODULS AN DEM MANTELROHR EINER LENKSPINDEL EINES KRAFTFAHRZEUGS**
DEVICE FOR SECURING A CASING TUBE SHIFTING MODULE TO THE CASING TUBE OF A STEERING SHAFT OF A MOTOR VEHICLE
DISPOSITIF DE FIXATION D'UN MODULE COMMUTATEUR DE TUBE ENVELOPPE SUR LE TUBE ENVELOPPE D'UN ARBRE DE DIRECTION D'UN VÉHICULE AUTOMOBILE

(30) Priorität: 17.06.2014 DE 102014008933
(43) Veröffentlichungstag der Anmeldung: 26.04.2017
(73) Patentinhaber: Leopold Kostal GmbH & Co. KG, 58513 Lüdenscheid (DE)
(72) Erfinder: FRENZEL, Maik, 58509 Lüdenscheid (DE); LANGS, Michael, 58511 Lüdenscheid (DE); HIRSCHFELD, Klaus, 58515 Lüdenscheid (DE); DEITMERG, Martin, 58507 Lüdenscheid (DE)
(74) Vertreter: Kerkmann, Detlef
(86) Internationale Anmeldenummer: PCT/EP2015/063352
(87) Internationale Veröffentlichungsnummer: WO 2015/193250

(56) Entgegenhaltungen:
- EP-A1- 1 319 573
- EP-A2- 1 403 168
- US-A1- 2009 183 588

## Beschreibung

Die Erfindung betrifft eine Einrichtung zum Befestigen eines Mantelrohrschaltermoduls an dem Mantelrohr einer Lenkspindel eines Kraftfahrzeugs beim Anbringen des Lenkrades an der Lenkspindel, mit einer zwischen dem Mantelrohr und dem Mantelrohrschaltermodul angeordneten Klemmgliedanordnung zur Ausübung einer Klemmkraft in radialer Richtung auf das Mantelrohr, wobei über die Statorseite eines Lagers zur Drehentkopplung des Lenkrades gegenüber dem Mantelrohrschaltermodul durch Erzeugen einer Relativbewegung zwischen dem Mantelrohrschaltermodul und dem Mantelrohr eine Klemmkraft auf die Klemmgliedanordnung übertragen wird.

Mantelrohrschaltermodule sind Schaltermodule, die im Bereich des Mantelrohrs der Lenkspindel eines Kraftfahrzeuges angeordnet sind. Diese Module tragen beispielsweise Lenkstockschalter und dergleichen. Je nach Ausgestaltung kann Teil des Mantelrohrschaltermoduls ebenfalls eine Wickelfederkassette, ein Winkelsensor oder dergleichen sein.

Das Mantelrohrschaltermodul ist in aller Regel konzentrisch zum Mantelrohr der Lenkspindel angeordnet und an diesem befestigt. Zum Befestigen eines solchen Mantelrohrschaltermoduls kann - wie in DE 199 42 247 C1 vorgesehen - ein Aussteifungs- und Kupplungsmodul dienen, das starr mit dem Mantelrohr verbunden ist. Dieses Modul umfasst Verbindungselemente, an denen das Mantelrohrschaltermodul befestigbar ist, beispielsweise durch eine stabile Clipsverbindung. Bei dem Gegenstand dieses Dokumentes ist vorgesehen, dass zum Erstellen des gesamten Lenksäulenmoduls zunächst das Mantelrohrschaltermodul an dem Mantelrohr befestigt wird und dass anschließend auf das Mantelrohrschaltermodul durchgreifende Ende der Lenkspindel das Lenkrad montiert wird.

In anderen Ausgestaltungen ist das Mantelrohrschaltermodul durch Schellen oder axiale Befestigungsmittel an dem Mantelrohr gehalten.

Aus der EP 1 403 168 B1 ist eine Einrichtung zum Befestigen eines Mantelrohrschaltermoduls gemäß dem Oberbegriff des Patentanspruchs 1 bekannt. Bei dieser Einrichtung befindet sich in einer radialen bzw. in einer radial wirkenden Anordnung zwischen dem Mantelrohr und dem Mantelrohrschaltermodul bzw. einem dem Mantelrohrschaltermodul zugeordneten Träger eine Klemmgliedanordnung. Über die Klemmgliedanordnung erfolgt eine Verklemmung des Mantelrohrschaltermoduls mit radial wirkenden Klemmkräften. Zum Aufbringen der Klemmkraft zwischen dem Mantelrohr und dem Mantelrohrschaltermodul wird das Mantelrohrschaltermodul insgesamt in axialer Richtung gegenüber dem Mantelrohr bewegt. Bei dieser Bewegung zum Festsetzen des Mantelrohrschaltermoduls an der Klemmgliedanordnung, die sich ihrerseits an der Außenseite des Mantelrohrschaltermoduls abstützt, wirkt mittelbar oder unmittelbar die Statorseite des Lagers, an dem rotorseitig das Lenkrad bzw. die Lenkradnabe anliegt, auf das Mantelrohrschaltermodul.

Gegenüber dieser vorbekannten Einrichtung hat vorliegende Erfindung den Vorteil, unter Verwendung einer deutlich einfacher gestalteten und damit kostengünstiger herzustellenden Klemmgliedanordnung eine zumindest ebenso sichere Befestigung zu ermöglichen.

Diese gelingt erfindungsgemäß dadurch, dass die Klemmgliedanordnung durch zwei Halbschellen mit jeweils zwei auswärts abgebogenen Endflanschen gebildet ist, die in einem Träger des Mantelrohrschaltermoduls axial verschiebbar so aufgenommen sind, dass sie beim Aufschieben des Mantelrohrschaltermoduls auf das Mantelrohr an zugeordneten axialen Endanschlägen, die an dem Mantelrohr ausgebildet sind, zur Anlage kommen, und dass in dem Träger des Mantelrohrschaltermoduls Andruckflächen ausgebildet sind, die beim Erzeugen der Relativbewegung zwischen dem Mantelrohrschaltermodul und dem Mantelrohr an den Endflanschen der Halbschellen zur Anlage kommen und dabei parallel zur tangentialen Richtung des Mantelrohrs wirkende Kräfte auf diese ausüben.

Die zum Spannen der Halbschellen benötigte axiale Bewegung zwischen dem Mantelrohrschaltermodul und dem Mantelrohr resultiert aus der über das Lager beim Montieren des Lenkrades übertragenen axialen Bewegung des Lenkrades beim Festschrauben desselben auf dem freien Ende der Lenkspindel. Somit erfolgt ein Festlegen des Mantelrohrschaltermoduls am Mantelrohr beim Anbringen des Lenkrades. In diesem Zusammenhang kann vorgesehen sein, dass das Mantelrohrschaltermodul gleichzeitig mit dem Lenkrad auf das freie Ende der Lenksäule aufgesteckt wird und an dem Mantelrohr durch Anziehen der Lenkradschraube festgelegt wird. Vorgesehen sein kann ebenfalls, dass das Mantelrohrschaltermodul zunächst auf das freie Ende der Lenksäule aufgesetzt wird und dass die eigentliche Festlegung des Mantelrohrschaltermoduls am Mantelrohr erst dann erfolgt, wenn das Lenkrad an dem freien Ende der Lenkspindel befestigt wird. Dies kann sinnvoll sein, wenn zwischen dem Schritt des Aufsetzens des Mantelrohrschaltermoduls und dem Schritt des Befestigen des Lenkrades an dem freien Ende der Lenkspindel weitere Montageschritte vorgenommen werden sollen.
In einer besonders bevorzugten Ausführung der erfindungsgemäßen Einrichtung ist zumindest eine der Halbschellen mit einer radial nach außen geformten Ausprägung versehen, zwischen der und dem Mantelrohr eine einstückig mit dem Träger ausgebildete Fixierlasche aufgenommen ist.

Durch eine radial nach außen ausgestellte Zunge oder Ausprägung an dem Mantelrohr können zusammen mit einer dieser zugeordneten Einformung an der Fixierlasche eine formschlüssige Festlegung sowie eine Verdrehsicherung des Trägers an dem Mantelrohr realisiert werden.

In einer zweckmäßigen Ausgestaltung der erfindungsgemäßen Einrichtung sind an dem Mantelrohr weitere radial nach außen ausgestellte Zungen oder Ausprägungen angebracht, die die axialen Endanschläge für die Halbschellen bilden.

Die Befestigungseinrichtung ist ohne weiteres auch wieder von dem Mantelrohr lösbar. Zu diesem Zweck wird das Mantelrohrschaltermodul entgegen seiner Montagerichtung von dem Mantelrohr abgezogen. Zum Unterstützen einer solchen Demontage sind in einer Weiterbildung der erfindungsgemäßen Einrichtung diese Bewegung unterstützende Rückstellfedern vorgesehen. Diese stützen sich mit ihren unteren Enden an zu diesem Zweck an die Halbschellen angeformten Absätzen ab, während ihre oberen Enden an Innenwänden des Trägers anliegen. Bei der Montage des Mantelrohrschaltermoduls werden die Rückstellfedern vorgespannt, so dass sie bei einer gewünschten Demontage und einem Lösen des Lenkrades von der Lenkspindel bestrebt sind, sich zu entspannen, um auf diese Weise das Mantelrohrschaltermodul von dem Mantelrohr wegzudrücken.

Nachfolgend ist die Erfindung anhand eines Ausführungsbeispiels unter Bezugnahme auf die beigefügten Figuren beschrieben. Es zeigen:

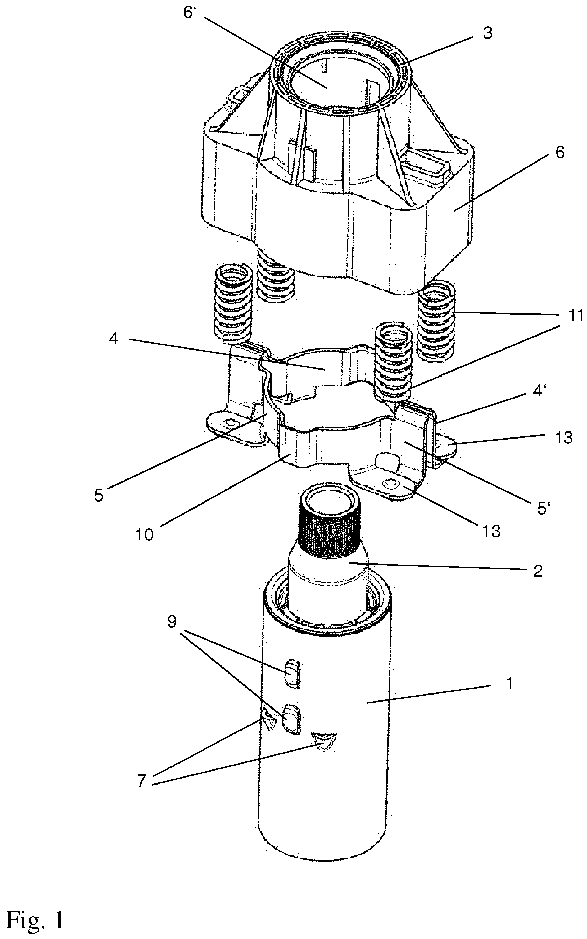

- **Fig. 1:**: eine Lenksäule mit einem Träger eines Mantelrohrschaltermoduls in einer Explosionsansicht
- **Fig. 2:**: einen Längsschnitt durch den Träger aus Fig. 1 im Bereich der Endflansche auf einer Seite der Halbschellen
a) in einer Vormontagestellung
b) in einer Endmontagestellung
- **Fig. 3:**: einen Querschnitt durch den Träger aus Fig. 1 im Bereich der Halbschellen
a) in einer Vormontagestellung
b) in einer Endmontagestellung

Die in der Zeichnung dargestellte, erfindungsgemäße Einrichtung umfasst eine in einem Mantelrohr 1 drehbar gelagerte Lenkspindel 2. An dem freien Ende der Lenkspindel 2 ist mittels einer Lenkradschraube ein Lenkrad befestigt, die in der Zeichnung nicht gezeigt sind. Das hier dargestellte freie Ende der Lenkspindel 2 ist mit einer Verzahnung versehen, und wird in eine entsprechend ausgebildete Montagehülse der Lenkradnabe eingesetzt. Die freie Stirnfläche der Montagehülse liegt an der Rotorseite eines Lagers 3 an, das konzentrisch zur der Lenkspindel 2 angeordnet ist.

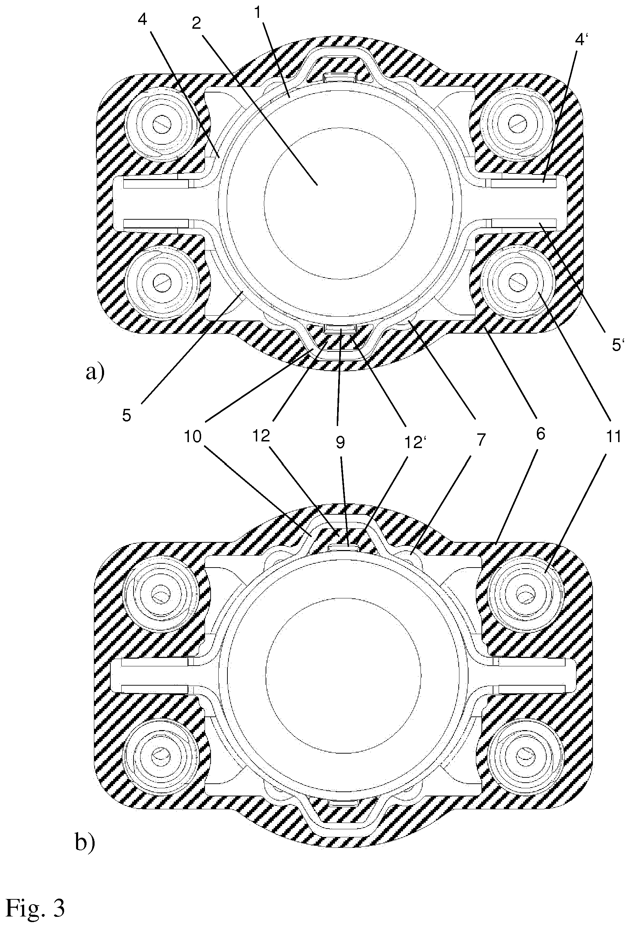

Die Einrichtung umfasst ferner ein Mantelrohrschaltermodul, von dem in der Zeichnung lediglich ein Träger 6 dargestellt ist. Der Träger 6 des Mantelrohrschaltermoduls umgibt das Mantelrohr 1 im Bereich seines oberen Abschlusses konzentrisch. Der Träger 6 umfasst zu diesem Zweck eine buchsenförmige Aufnahme 6', in die das freie Ende des Mantelohrs 1 eingreift. An der Innenseite der buchsenförmigen Aufnahme 6' des Trägers 6 ist eine Klemmgliedanordnung aufgenommen, die zur Festlegung des Mantelrohrschaltermoduls an dem Mantelrohr 1 dient. Die Klemmgliedanordnung ist durch zwei Halbschellen 4, 5 gebildet, die mit jeweils zwei auswärts abgebogenen Endflanschen 4', 5' versehen sind. Die Halbschellen 4, 5 sind so geformt und in dem Träger 6 des Mantelrohrschaltermoduls aufgenommen, dass sie beim Aufschieben des Mantelrohrschaltermoduls auf das Mantelrohr 1 letzteres mit geringem Spiel umgreifen. Die Halbschellen 4, 5 sind zudem etwa in der Mitte zwischen ihren jeweils beiden Endflanschen 4', 5' mit radial nach außen geformten Ausprägungen 10 versehen und in dem Träger 6 des Mantelrohrschaltermoduls axial verschiebbar gehalten. Zwischen den Ausprägungen 10 der Halbschellen 4, 5 und dem Mantelrohr befinden sich, wie in der Fig. 3 zu erkennen, einstückig mit dem Träger 6 ausgebildete Fixierlaschen 12. An den Halbschellen 4, 5 sind weiterhin Absätze 13 angeformt, an denen sich Rückstellfedern 11 abstützen, die mit ihren anderen Enden an gegenüberliegenden Innenwänden des Trägers 6 anliegen. In der Ausgangslage vor der Montage des Mantelrohrschaltermoduls sind die Rückstellfedern 11 im entspannten Zustand.

An dem Mantelrohr 1 sind axiale Endanschlägen 7 ausgebildet, an denen die Halbschellen 4, 5 beim Aufschieben des Mantelrohrschaltermoduls auf das Mantelrohr 1 zur Anlage kommen. Die axialen Endanschläge 7 sind durch die in der Zeichnung erkennbaren, radial nach außen ausgestellten Zungen bzw. Ausprägungen an dem Mantelrohr 1 gebildet.

Beim Montieren des Lenkrades wird über die Lenkradnabe eine axiale Bewegung zum Mantelrohr 1 hin vollzogen. Diese axiale und zur Montage des Lenkrades notwendige Bewegung wird über das Lager 3 auf den Träger 6 des Mantelrohrschaltermoduls übertragen, der zu diesem Zweck an der Statorseite des Lagers 3 anliegt. Somit wird bei einer Montage des Lenkrades die axiale Montagebewegung auf den Träger 6 des Mantelrohrschaltermoduls übertragen. Die Halbschellen 4, 5 befinden sich vor der Montage des Mantelrohrschaltermoduls nahe der lenkradabgewandten, offenen Seite der buchsenförmige Aufnahme 6' des Trägers 6. Im Verlaufe der axialen Montagebewegung kommen sie an den an dem Mantelrohr 1 ausgebildeten axialen Endanschlägen 7 zur Anlage.

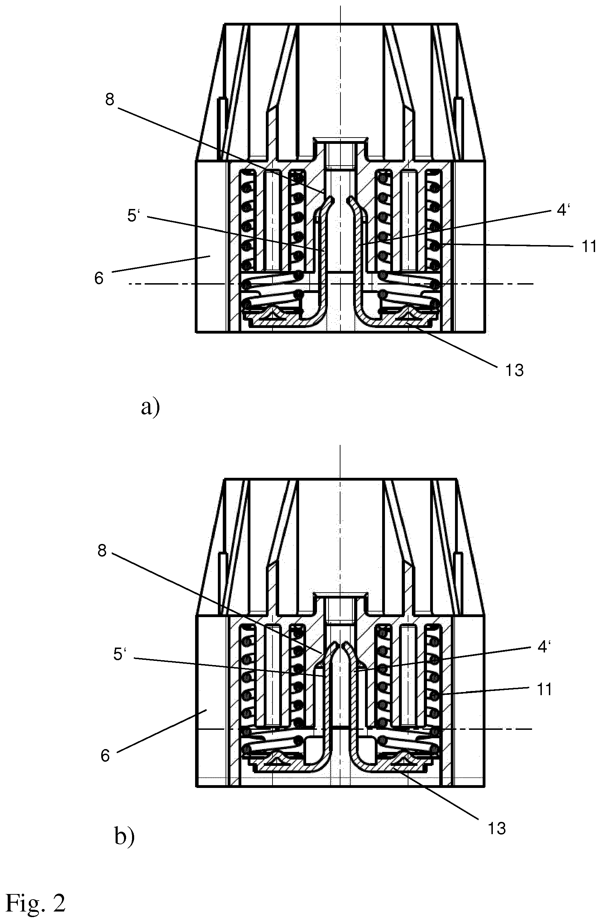

Bei der weiteren Fortsetzung der axialen Montagebewegung wird der Träger 6 gegen die nunmehr festgesetzten Halbschellen 4, 5 weiterbewegt. Dies ist in der Zeichnung in Fig. 2 zu erkennen, wo dieser Vorgang der Änderung der relativen Lage des Trägers 6 gegenüber den Halbschellen 4, 5 von Fig. 2 a) nach Fig. 2 b) entspricht. Dabei werden zum Einen die Rückstellfedern 11 zusammengedrückt und damit gespannt, zum Anderen kommen in dem Träger 6 ausgebildete Andruckflächen 8 an den Endflanschen 4', 5' der Halbschellen 4, 5 zur Anlage. Die Andruckflächen 8 sind jeweils als in Richtung Oberseite des Mantelrohrschaltermoduls aufeinander zu laufende schräge Ebenen ausgebildet, die bei der Fortsetzung der axialen Montagebewegung parallel zur tangentialen Richtung des Mantelrohrs 1 wirkende Kräfte auf die Halbschellen 4, 5 ausüben und somit den Träger 6 klemmend auf dem Mantelrohr 1 befestigen. Dabei werden, wie in der Zeichnung in Fig. 3 zu erkennen, wo dieser Vorgang der Änderung von Fig. 3 a) nach Fig. 3 b) entspricht, die einstückig mit dem Träger 6 ausgebildeten Fixierlaschen 12 zwischen den Ausprägungen 10 der Halbschellen 4, 5 und dem Mantelrohr 1 eingeklemmt.

Zur weiteren Verbesserung der Befestigung sind an dem Mantelrohr 1 zusätzlich radial nach außen ausgestellte Zungen bzw. Ausprägungen 9 vorhanden, die in diesen zugeordneten Einformungen 12' der Fixierlaschen 12 des Trägers 6 eingreifen. Dadurch ist zum Einen eine Verdrehsicherung des Trägers gegenüber dem Mantelrohr erzielt, zum Anderen ist durch entsprechende Gestaltung der Einformungen 12' der Fixierlaschen 12 in Relation zu den Zungen bzw. Ausprägungen 9 des Mantelrohrs 1 nicht nur eine kraftschlüssige sondern auch eine formschlüssige Festlegung des Trägers 6 an dem Mantelrohr 1 erreicht.

Eine Demontage des Mantelrohrschaltermoduls erfolgt auf umgekehrte Weise, wobei nach einer Demontage des Lenkrades von der Lenkspindel 2 das Mantelrohrschaltermodul mit seinem Träger 6 von dem Mantelrohr 1 in axialer Richtung abgezogen wird. Zum Erleichtern des Lösens der bewirkten Verklemmung zwischen dem Träger 6 und dem Mantelrohr 1 dienen die Rückstellfedern 11, die sich bei diesem Vorgang entspannen und mit ihrer Federkraft den Demontagevorgang unterstützen.

## Patentansprüche

1. Einrichtung zum Befestigen eines Mantelrohrschaltermoduls an dem Mantelrohr (1) einer Lenkspindel (2) eines Kraftfahrzeugs beim Anbringen des Lenkrades an der Lenkspindel (2), mit einer zwischen dem Mantelrohr (1) und dem Mantelrohrschaltermodul angeordneten Klemmgliedanordnung zur Ausübung einer Klemmkraft in radialer Richtung auf das Mantelrohr (1), wobei über die Statorseite eines Lagers (3) zur Drehentkopplung des Lenkrades gegenüber dem Mantelrohrschaltermodul durch Erzeugen einer Relativbewegung zwischen dem Mantelrohrschaltermodul und dem Mantelrohr (1) eine Klemmkraft auf die Klemmgliedanordnung übertragen wird, **dadurch gekennzeichnet, dass** die Klemmgliedanordnung durch zwei Halbschellen (4, 5) mit jeweils zwei auswärts abgebogenen Endflanschen (4', 5') gebildet ist, die in einem Träger (6) des Mantelrohrschaltermoduls axial verschiebbar so aufgenommen sind, dass sie beim Aufschieben des Mantelrohrschaltermoduls auf das Mantelrohr (1) an zugeordneten axialen Endanschlägen (7), die an dem Mantelrohr (1) ausgebildet sind, zur Anlage kommen, und dass in dem Träger (6) des Mantelrohrschaltermoduls Andruckflächen (8) ausgebildet sind, die beim Erzeugen der Relativbewegung zwischen dem Mantelrohrschaltermodul und dem Mantelrohr (1) an den Endflanschen (4', 5') der Halbschellen (4, 5) zur Anlage kommen und dabei parallel zur tangentialen Richtung des Mantelrohrs (1) wirkende Kräfte auf diese ausüben.

2. Einrichtung nach Anspruch 1, **dadurch gekennzeichnet, dass** zumindest eine der Halbschellen (4, 5) in mit einer radial nach außen geformten Ausprägung (10) versehen ist, und dass zwischen dieser Ausprägung (10) und dem Mantelrohr (1) eine einstückig mit dem Träger (6) ausgebildete Fixierlasche (12) aufgenommen ist.

3. Einrichtung nach Anspruch 2, **dadurch gekennzeichnet, dass** an dem Mantelrohr (1) zumindest eine radial nach außen ausgestellte Zunge oder Ausprägung (9) vorhanden ist, die mit einer zugeordneten Einformung (12') an der Fixierlasche (12) zur Realisierung einer formschlüssigen Festlegung und Verdrehsicherung kooperiert.

4. Einrichtung nach einem der Ansprüche 1 bis 3, **dadurch gekennzeichnet, dass** die axialen Endanschläge (7) an dem Mantelrohr (1) als radial nach außen ausgestellte Zungen oder Ausprägungen ausgebildet sind.

5. Einrichtung nach einem der Ansprüche 1 bis 4, **dadurch gekennzeichnet, dass** die Einrichtung Rückstellfedern (11) umfasst, die mit ihrer Federkraft der Relativbewegung zwischen dem Mantelrohrschaltermodul und dem Mantelrohr (1) entgegenwirkend angeordnet sind.

6. Einrichtung nach Anspruch 5, **dadurch gekennzeichnet, dass** an die Halbschellen (4, 5) Absätze (13) angeformt sind, an denen sich die Rückstellfedern (11) abstützen.

## Claims

1. Device for attaching a steering column tube switch module to the steering column tube (1) of the steering shaft (2) of a motor vehicle when mounting the steering wheel on the steering shaft (2), having a clamping member arrangement located between the steering column tube (1) and the steering column tube switch module for the purpose of exerting a radial clamping force on the steering column tube (1) whereby, by generating a relative movement between the steering column tube switch module and the steering column tube (1), a clamping force is transferred via the stator side of a bearing (3) to the clamping member arrangement for the rotary decoupling of the steering wheel in relation to the steering column tube switch module,
**characterised in that** the clamping member arrangement is formed by two half-clamps (4, 5), each having two outwardly bent end flanges (4', 5') and being accommodated in an axially slideable fashion in a support (6) of the steering column tube switch module in such a manner that, upon sliding the steering column tube switch module onto the steering column tube (1), they come to rest on assigned axial limit stops (7) formed onto the steering column tube (1), and that pressing surfaces (8) are formed in the support (6) of the steering column tube switch module which, upon generating the relative movement between the steering column tube switch module and the steering column tube (1), come to rest on the end flanges (4', 5') of the half clamps (4, 5), in the process exerting forces on the same that act parallel to the tangential direction of the steering column tube (1).

2. Device according to Claim 1, **characterised in that** at least one of the half-clamps (4, 5) is provided with a protrusion (10) moulded radially outwards, and that a fixing lug (12) which is integrally moulded with the support (6) is accommodated between this protrusion (10) and the steering column tube (1).

3. Device according to Claim 2, **characterised in that** at least one tongue or protrusion (9) bent radially outwards is provided on the steering column tube (1) and cooperates with an assigned indentation (12') on the fixing lug (12) for the purpose of achieving a positive locating and anti-torsion element.

4. Device according to any of Claims 1 to 3, **characterised in that** the axial limit stops (7) on the steering column tube (1) are designed as tongues or protrusions that are bent radially outwards.

5. Device according to any of Claims 1 to 4, **characterised in that** the device incorporates restoring springs (11) which are arranged so as to counteract the relative movement between the steering column tube switch module and the steering column tube (1) with their spring force.

6. Device according to Claim 5, **characterised in that** shoulders (13) are moulded onto the half-clamps (4, 5) on which the restoring springs (11) are supported.

## Revendications

1. Dispositif de fixation d'un module de commutation pour 'enveloppe tubulaire sur l'enveloppe tubulaire (1) d'un arbre de direction (2) d'un véhicule automobile lors du montage du volant de direction sur l'arbre de direction (2), avec un agencement d'éléments de serrage, qui, disposé entre l'enveloppe tubulaire (1) et le module de commutation pour enveloppe tubulaire, exerce, dans la direction radiale, une force de serrage sur l'enveloppe tubulaire (1), sachant que, par le côté stator d'un palier (3), pour le découplage de la rotation du volant de direction par rapport au module de commutation pour enveloppe tubulaire par génération d'un mouvement relatif entre le module de commutation pour enveloppe tubulaire et l'enveloppe tubulaire (1), une force de serrage est transmise à l'agencement d'éléments de serrage,
**caractérisé en ce que**
l'agencement d'éléments de serrage est formé par deux demi-colliers (4, 5), qui, comprenant chacun deux brides finales (4', 5') courbées vers le haut, sont agencés, déplaçables axialement sur un support (6) du module de commutation pour enveloppe tubulaire, de manière à ce que, lors du déplacement du module de commutation pour enveloppe tubulaire sur l'enveloppe tubulaire (1), ils viennent porter contre des butées finales (7), qui sont formées sur l'enveloppe tubulaire (1), et que, dans le support (6) du module de commutation pour enveloppe tubulaire, sont formées des surfaces de contact (8), qui, lors de la génération du mouvement relatif entre le module de commutation pour enveloppe tubulaire et l'enveloppe tubulaire (1), viennent porter contre les brides finales (4', 5') des demi-colliers (4, 5) et, ce faisant, exercent des forces, qui agissent parallèlement à la direction tangentielle de l'enveloppe tubulaire (1).

2. Dispositif selon la revendication 1, **caractérisé en ce qu'au** moins l'un des demi-colliers (4, 5) est pourvu d'un bosselage (10), bombé radialement vers l'extérieur, et que, entre ce bosselage (10) et l'enveloppe tubulaire (1), est logée une patte de fixation (12), qui est formée d'une pièce avec le support (6).

3. Dispositif selon la revendication 2, **caractérisé en ce que,** sur l'enveloppe tubulaire (1), est prévue au moins une languette ou un bosselage (9), orienté radialement vers l'extérieur, qui coopère avec une moulure (12') associé, formée sur la patte de fixation (12), pour la réalisation d'une fixation par engagement géométrique et la sécurisation contre le déplacement..

4. Dispositif selon l'une des revendications 1 à 3, **caractérisé en ce que** les butées finales, axiales (7) sur l'enveloppe tubulaire (1) sont réalisées en forme de languettes ou de bosselages radialement orientés vers l'extérieur.

5. Dispositif selon l'une des revendications 1 à 4, **caractérisé en ce que** le dispositif comprend des ressorts de rappel (11), qui agissent avec leur force élastique contre le mouvement relatif entrer le module de commutation pour enveloppe tubulaire et l'enveloppe tubulaire (1).

6. Dispositif selon la revendication 5, **caractérisé en ce que,** sur les demi-colliers (4, 5), sont formés des saillies (13) sur lesquelles les ressorts de rappel (11) prennent appui.
